# EUROPÄISCHE PATENTANMELDUNG

(11) **EP 4 201 290 A1**
(43) Veröffentlichungstag der Anmeldung: **28.06.2023**
(21) Anmeldenummer: 21216764.7
(22) Anmeldetag: 22.12.2021
(51) Int. Cl.: A47L 9/20

(54) **FILTERABREINIGUNGSEINHEIT, STAUBSAUGER UND VERFAHREN ZUR ABREINIGUNG EINES FILTERS IN EINEM STAUBSAUGER**

(71) Anmelder: Hilti Aktiengesellschaft, 9494 Schaan (LI)
(72) Erfinder: van Taack-Trakranen, John, 81475 München (DE); Hanslmeier, Xaver, 87665 Mauerstetten (DE); Podhorny, Roman, 86807 Buchloe (DE)
(74) Vertreter: Hilti Aktiengesellschaft Corporate Intellectual Property

(57) **Zusammenfassung**

Die Erfindung betrifft eine Filterabreinigungseinheit für einen Staubsauger, insbesondere einen Bausauger, wobei der Staubsauger eine Turbine zu Erzeugung eines Saugluftstroms umfasst, sowie einen Filter zum Filtern des Saugluftstroms. Zwischen der Turbine und dem Filter ist ein Ansaugkanal vorgesehen, wobei der Ansaugkanal durch ein Trennelement in mindestens einen ersten Ansaugteilkanal und einen zweiten Ansaugteilkanal trennbar ist, wobei die Filterabreinigungseinheit mindestens eine Ventileinheit zum Freigeben oder Verschließen der Ansaugteilkanäle aufweist. In weiteren Aspekten betrifft die Erfindung einen Staubsauger mit einer solchen Filterabreinigungseinheit, sowie ein Verfahren zum Abreinigen eines Filters eines Staubsaugers mit einer erfindungsgemäßen Filterabreinigungseinheit. Mit der Erfindung kann eine steuerbare Filterabrenigung bereitgestellt werden, bei der die Abreinigungswirkung durch das vorteilhafte Zusammenwirken der Filterabreinigungseinheit und seiner Komponenten verstärkt werden kann.

## Beschreibung

Die Erfindung betrifft eine Filterabreinigungseinheit für einen Staubsauger, insbesondere einen Bausauger, wobei der Staubsauger eine Turbine zu Erzeugung eines Saugluftstroms umfasst, sowie einen Filter zum Filtern des Saugluftstroms. Zwischen der Turbine und dem Filter ist ein Ansaugkanal vorgesehen, wobei der Ansaugkanal durch ein Trennelement in mindestens einen ersten Ansaugteilkanal und einen zweiten Ansaugteilkanal teilbar ist, wobei die Filterabreinigungseinheit mindestens eine Ventileinheit zum Freigeben oder Verschließen der Ansaugteilkanäle aufweist. In weiteren Aspekten betrifft die Erfindung einen Staubsauger mit einer solchen Filterabreinigungseinheit, sowie ein Verfahren zum Abreinigen eines Filters eines Staubsaugers mit einer erfindungsgemäßen Filterabreinigungseinheit. Mit der Erfindung kann eine steuerbare Filterabrenigung bereitgestellt werden, bei der die Abreinigungswirkung durch das vorteilhafte Zusammenwirken der Filterabreinigungseinheit und seiner Komponenten verstärkt werden kann.

### Hintergrund der Erfindung:

Im Stand der Technik sind Staubsaugvorrichtungen bekannt, die insbesondere auf Baustellen genutzt werden, um in Verbindung mit der Benutzung von Werkzeugmaschinen, wie beispielsweise Bohr- oder Schleifgeräten, auftretenden Staub abzusaugen. Solche sogenannten Baustellensauger oder Bausauger umfassen üblicherweise in einem oberen Bereich einen Saugerkopf und in einem unteren Bereich der Staubsaugvorrichtung einen Sammelbehälter für den aufgesaugten Staub.

Das Einsaugen des Staubs erfolgt bei bekannten Bausaugern mit einer Turbine, die mit einem Motor angetrieben wird. Insbesondere erzeugt die Turbine einen Absaugstrom, indem in der Staubsaugvorrichtung ein Unterdruck bereitgestellt wird. Vorzugsweise kann die Turbine auch als Gebläse ausgebildet sein. Die Turbine bzw. das Gebläse sind empfindliche Bauteile der Staubsaugvorrichtung, die insbesondere vor Staub geschützt werden müssen. Daher sind dem Gebläse oder der Turbine üblicherweise Filter oder Filterelemente vorgeschaltet, um etwaigen Staub, der im Absaugstrom verblieben ist, aus dem Absaugstrom herauszufiltern, bevor der Staub in den Bereich der Turbine oder des Gebläses gelangt. Diese Filter oder Filterelemente können sich im Laufe der Zeit mit Staub zusetzen, wodurch ihre Funktionalität beeinträchtigt werden kann.

Konventionelle Baustellensauger, die aus dem Stand der Technik bekannt sind, verfügen üblicherweise über eine Filterabreinigungseinheit, mit der der Filter der Staubsaugvorrichtung in regelmäßigen Abständen gereinigt werden kann. Eine solche Filterreinigung wird im Sinne der Erfindung bevorzugt als "Filterabreinigung" bezeichnet. In den meisten Fällen findet eine Filterabreinigung dadurch statt, dass eine Rückspülung verwendet wird oder durch ein mechanisches Rütteln an dem Filter. Bei Rückspüllösungen wird häufig ein Ventil an der Außenseite des Staubsaugers geöffnet und der Filter mit einem Außenluftstrom beaufschlagt. Dabei ist die Strömungsrichtung dieses Außen- oder Rückspülluftstroms der Strömungsrichtung des Saugluftstroms im Saugbetrieb des Staubsaugers entgegengerichtet. Das direkte Beaufschlagen des Filters mit Außenluft kann sich allerdings ungünstig auf die Druckverhältnisse im Staubsauger auswirken, weil sich der Druck im Bereich des Filters kurzfristig erhöht. Außerdem kann bei der direkten Beaufschlagung des Filters mit Außenluft der Filter von der ungefilterten Außenluft verschmutzt werden.

Aufgabe der vorliegenden Erfindung ist es, die vorstehend beschriebenen Probleme zu lösen und ein Verfahren zum Abreinigen eines Filters eines Staubsaugers, einen Staubsauger, sowie eine Filterabreinigungseinheit bereitzustellen, mit denen der Filter effizient, ohne Verschmutzung und steuerbar abgereinigt werden kann. Darüber hinaus würde es die Fachwelt begrüßen, wenn eine besonders energieeffiziente Filterabreinigung bereitgestellt werden könnte, die den Energieverbrauch des Staubsaugers minimiert. Die Erfindung ist damit besonders für den Einsatz in akkubetriebenen Staubsaugern geeignet. Ferner soll mit der Erfindung eine besonders robuste und kompakte Filterabreinigungseinheit bereitgestellt werden.

Die Aufgabe wird dadurch gelöst durch den Gegenstand der unabhängigen Ansprüche. Vorteilhafte Ausführungsformen zu dem Gegenstand der unabhängigen Ansprüche finden sich in den abhängigen Unteransprüchen.

### Beschreibung der Erfindung:

Die Aufgabe wird dabei in einem ersten Aspekt durch eine Filterabreinigungseinheit für einen Staubsauger, insbesondere einen Bausauger, gelöst, wobei der Staubsauger eine Turbine zu Erzeugung eines Saugluftstroms umfasst, sowie einen Filter zum Filtern des Saugluftstroms. Zwischen der Turbine und dem Filter ist ein Ansaugkanal vorgesehen, wobei der Ansaugkanal durch ein Trennelement in mindestens einen ersten Ansaugteilkanal und einen zweiten Ansaugteilkanal aufgeteilt werden kann, wobei die Filterabreinigungseinheit mindestens eine Ventileinheit zum Freigeben oder Verschließen der Ansaugteilkanäle aufweist.

Durch die Vorsehung des Trennelements innerhalb des Ansaugkanals und durch die Ventileinheit, die dazu eingerichtet ist, die Ansaugteilkanäle zu öffnen oder zu verschließen, kann eine Filterabreinigungseinheit bereitgestellt werden, bei der unterschiedliche Drücke bzw. Druckverhältnisse zueinander in den unterschiedlichen Teilbereichen, die im Sinne der Erfindung bevorzugt als Ansaugteilkanäle bezeichnet werden, eingestellt werden können. Durch die Ventileinheit können die Drücke und Druckverhältnisse in den Teilbereichen des Ansaugkanals zwischen Filter und Turbine aktiv gesteuert bzw. eingestellt werden und auf diese Weise eine optimale Abreinigung für den Filter des Staubsaugers bzw. der Filterabreinigungseinheit bereitgestellt werden. Tests haben gezeigt, dass die vorgeschlagene Filterabreinigungseinheit, sowie das später genauer beschriebene Anreinigungsverfahren besonders energiesparend sind, da die Druckverhältnisse und Druckunterschiede innerhalb des Staubsaugers effizient genutzt werden, um einzelne Komponenten der Filterabreinigungseinheit zu bewegen oder in ihre ursprüngliche Position zurückzubringen. Dadurch kann die vorgeschlagene Filterabreinigungseinheit besonders gut in akkubetriebenen Staubsaugern verwendet werden, weil durch die Erfindung ein besonders langer Saugbetrieb ermöglicht werden kann, ohne die Energieversorgungsvorrichtung laden zu müssen. Die Druckverhältnisse können durch geschickt angeordnete und angesteuerte Komponenten der Filterabreinigungseinheit, wie Ventile, Trennelemente und Kolbenelemente, eingestellt und geregelt werden.

Es ist im Sinne der Erfindung bevorzugt, dass die Filterabreinigungseinheit eine Turbine und einen Filter umfasst. Es kann selbstverständlich auch bevorzugt sein, dass die Filterabreinigungseinheit mehr als eine Turbine und mehr als einen Filter umfasst. Beispielsweise kann die Filterabreinigungseinheit bzw. der entsprechende Staubsauger zwei Turbinen umfassen oder zwei Filter. Der Staubsauger kann beispielsweise auch mehr als eine Filterabreinigungseinheit aufweisen, beispielsweise zwei. Wenn der Staubsauger zwei Filterabreinigungseinheiten und zwei Filter aufweist, kann jedem Filter ein teilbarer Ansaugkanal zugeordnet werden, in dem die Druckverhältnisse wie beschrieben eingestellt werden können, um eine verbesserte Filterabreinigung zu ermöglichen.

Die Filterabreinigungseinheit kann eine abgeschlossene Einheit im Staubsauger darstellen, die beispielsweise von einem Gehäuse umgeben sein kann. Die Filterabreinigungseinheit weist einen Ansaugkanal auf, der sich zwischen der Turbine des Staubsaugers und seinem Filter erstreckt. In dem Ansaugkanal ist mindestens ein Trennelement vorgesehen, wobei das mindestens eine Trennelement dazu eingerichtet ist, den Ansaugkanal in mindestens zwei Teilbereiche zu unterteilen, wobei diese Teilbereiche im Sinne der Erfindung bevorzugt als "Ansaugteilkanäle" bezeichnet werden. In einer bevorzugten Ausgestaltung der Erfindung kann ein erster, oberer Ansaugteilkanal gebildet werden, sowie ein zweiter, unterer Ansaugteilkanal. Der zweite Ansaugteilkanal stellt vorzugsweise die kürzeste und direkteste Verbindung zwischen Turbine und Filter dar, während der Verbindungsweg zwischen Turbine und Filter, wenn der Weg über den ersten Ansaugteilkanal gewählt wird, etwas länger ausfällt. An seiner Unterseite weist die Filterabrenigungseinheit den Filter auf, der von Zeit zu Zeit abgereinigt werden muss, um eine gute Saugleistung des Staubsaugers und eine gute Filterwirkung des Filters zu gewährleisten. Der Filter ist zwischen der Filterabreinigungseinheit und einem Schmutzsammenbehälter angeordnet, wobei der Filter den Schmutzsammelbehälter vorzugsweise nach oben abschließt. Der Schmutzsammelbehälter kann eine Öffnung aufweisen, wobei an die Öffnung ein Saugschlauch angeschlossen werden kann. Wenn die Turbine des Staubsaugers eingeschaltet wird, wird durch die Turbine ein Unterdruck erzeugt, mit dem Staub aus der Umgebung des Staubsaugers durch den Saugschlauch eingesaugt werden kann. Der größte Teil des Staubs verbleibt in den Schmutzsammelbehälter, während ein kleiner Anteil des Staubs weiter von dem Saugluftstrom fortgetragen wird. Der Saugluftstrom, der von der Turbine erzeugt wird, strömt von dem Schmutzsammelbehälter durch den Filter in Richtung der Turbine. Durch den Anteil des Staubs, der in dem Saugluftstrom verbleibt und sich nicht im Schmutzsammelbehälter abgeschieden hat, kann sich der Filter zusetzen, so dass sich ein unerwünschter Filterkuchen ausbildet. Solche Schmutzreste, verbliebende Staubpartikel und Filterkuchen sollen im Rahmen einer Filterabreinigung von dem Filter des Staubsaugers gelöst werden, so dass sie in den Schmutzsammelbehälter des Staubsaugers fallen, um später sach- und fachgerecht entsorgt zu werden.

Die Filterabreinigungseinheit kann darüber hinaus ein Kolbenelement aufweisen, das später detailliert beschrieben wird. Das Kolbenelement ist dazu eingerichtet, innerhalb der Filterabreinigungseinheit eine Auf- und Abbewegung durchzuführen, wobei das Kolbenelement während des Saugbetriebs des Staubsaugers in einer Ruheposition vorliegt und während der Filterabreinigung von der Ruheposition in einer Filterabreinigungsposition überführt wird. Bei der Bewegung des Kolbenelements zwischen der Ruhe- und der Filterabreinigungsposition kann es sich selbstverständlich auch um eine Vorwärts- und Rückwärtsbewegung oder jede andere Art von Bewegung handeln, je nachdem, wie die Filterabreinigungseinheit in dem Staubsauger und die Komponenten in der Filterabreinigungseinheit angeordnet vorliegen. Die Ruheposition liegt vorzugsweise auf Höhe des Trennelements der Filterabreinigungseinheit vor, während die Filterabreinigungsposition in räumlicher Nähe zu dem Filter vorliegt. Das Kolbenelement kann Stoppelemente umfassen, die das Kolbenelement dabei unterstützen, die Ruhe- oder die Filterabreinigungsposition einzunehmen. Die Stoppelemente können beispielswese ein elastisches Material umfassen oder aus einem elastischen Material gebildet sein. Vorzugsweise weist das Kolbenelement sowohl an seiner Oberseite, als auch an seiner Unterseite Stoppelemente auf. Die Auf- und Abbewegung des Kolbenelements wird durch eine Linear- bzw. Axialführung ermöglicht, die zwischen dem Filter des Staubsaugers und einer Oberseite des Filterabreinigungseinheit verläuft. Die Linearführung verläuft vorzugsweise vertikal innerhalb der Filterabreinigungseinheit, d.h. im Wesentlichen senkrecht zum Filter bzw. zur Oberseite der Filterabreinigungseinheit.

Die Filterabreinigungseinheit kann darüber hinaus eine Außenöffnung aufweisen, die die Filterabreinigungseinheit mit einer Umgebung des Staubsaugers verbindet. Die Außenöffnung kann in einem Gehäuse der Filterabreinigungseinheit vorgesehen sein oder an einer Außenwand des Staubsaugers. Auf jeden Fall verbindet die Außenöffnung das Innere des Staubsaugers bzw. der Filterabreinigungseinheit mit der Umgebung des Staubsaugers, so dass Umgebungsluft in den Staubsauger bzw. in die Filterabreinigungseinheit eindringen kann, wenn ein Außenventil, dass die Außenöffnung verschließt, geöffnet wird. Die Außenöffnung liegt insbesondere in einem Teilbereich der Filterabreinigungseinheit vor, der auf der Druckseite der Turbine vorliegt. Das bedeutet im Sinne der Erfindung bevorzugt, dass die Außenöffnung vorzugsweise außerhalb des Ansaugbereichs zwischen Turbine und Filter angeordnet vorliegt. Es ist im Sinne der Erfindung bevorzugt, dass die Außenöffnung während des Saugbetriebs des Staubsaugers geschlossen vorliegt, während die Außenöffnung geöffnet werden kann, um einen Abreinigungsprozess für den Filter des Staubsaugers zu starten. Die Außenöffnung kann vorzugsweise dadurch geöffnet werden, dass das Außenventil, welches die Außenöffnung währen des Saugbetriebs des Staubsaugers verschließt, geöffnet wird. Dadurch kann Umgebungsluft, die im Sinne der Erfindung bevorzugt auch als Außen- oder Arbeitsluft bezeichnet wird, in das Innere des Staubsaugers bzw. der Filterabreinigungseinheit einströmen.

Das Einströmen der Umgebungsluft erfolgt vorzugsweise schlagartig, da während des Saugbetriebs in dem Staubsauger ein Unterdruck von beispielsweise 100 mbar herrscht. Durch das Öffnen der Außenöffnung kommt es zumindest teilweise zu einem Druckausgleich. Durch die Wucht der einströmenden Außenluft wird das Kolbenelement aus seiner Ruheposition in die Filterabreinigungsposition verschoben, was später detailliert beschrieben wird. Das Kolbenelement überfährt dabei den zweiten Ansaugteilkanal, so dass die Saugverbindung zwischen der Turbine und dem Filter des Staubsaugers getrennt wird. Diese Trennung der Saugverbindung zwischen Turbine und Filter wird im Sinne der Erfindung bevorzugt als "Entkopplung" bezeichnet. Das Kolbenelement liegt in seiner Filterabreinigungsposition zwischen Filter und Turbine angeordnet vor, so dass es die Saugverbindung zwischen Turbine und Filter unterbricht und so die Turbine und den Filter strömungstechnisch voneinander trennt bzw. entkoppelt. Insbesondere trennt das Kolbenelement in seiner Filterabreinigungsposition den Filter strömungstechnisch von der restlichen Filterabreinigungseinheit und den dort herrschenden Drücken bzw. Druckverhältnissen. Dadurch wird der Filter während der Filterabreinigung im Wesentlichen weder von einem Unterdruck, noch von einem Überdruck beaufschlagt und der Filter kann mit einem geringen Kraftaufwand und besonders einfach und unkompliziert abgereinigt werden. Durch die quasi herrschende Druckfreiheit des Filters kann der Filterkuchen leichter vom Filter getrennt werden. Vorteilhafterweise kann der Filterkuchen im Wesentlichen ohne Gegenkraft abgespült werden.

Durch das schlagartige Einströmen von Außenluft wird das Kolbenelement in Richtung des Filters beschleunigt, so dass sich ein Polster aus komprimierter Luft auf seiner Unterseite ausbildet, wobei dieses Luftpolster ebenfalls in Richtung Filter beschleunigt wird. Das Luftpolster erreicht den Filter und übt einen Abreinigungsimpuls auf den Filter aus, der zu einer mechanischen Erschütterung und dadurch zu einer Abreinigung des Filters führt. Neben der Erschütterung kommt es auch zu einem Durchströmen des Filters in umgekehrter Saugstromrichtung. Somit ermöglicht die Erfindung vorteilhafterweise eine geschickte Kombination von mechanischer Erschütterung und einer Durchspülung des Filters mit gefilterter Prozessluft, wodurch eine erheblich verbesserte Filterabreinigung bereitgestellt werden kann. Da im Wesentlichen nicht die Außenluft selbst auf den Filter wirkt, sondern die Außenluft vielmehr dazu verwendet wird, das Kolbenelement zu beschleunigen, wird im Kontext der vorliegenden Erfindung bevorzugt von einem "indirekten Abreinigungsimpuls" gesprochen, der ein Sich-Abwenden vom Stand der Technik darstellt und eine Abreinigung des Filters mit gefilterter Arbeitsluft anstelle von ungefilterter Außenluft ermöglicht.

Das Kolbenelement kann aus seiner Filterabreinigungsposition dadurch zurück in seine Ruheposition geholt werden, dass die Ventileinheit umgeschaltet wird und den zweiten Ansaugteilkanal, der während des Saugbetriebs des Staubsaugers geöffnet ist, schließt, während der erste Ansaugteilkanal, der während des Saugbetriebs geschlossen ist, öffnet. Dadurch ändern sich die Druckverhältnisse in der Filterabreinigungseinheit dergestalt, dass der Druck im ersten Ansaugteilkanal sinkt, da durch die Saugleistung der Turbine, mit der der erste Ansaugteilkanal nun verbunden ist, ein Unterdruck erzeugt wird. Der Druck im zweiten Ansaugteilkanal steigt dahingegen, da der zweite Ansaugteilkanal nicht mehr mit der unterdruckerzeugenden Turbine verbunden ist. Diese geänderten Druckverhältnisse führen dazu, dass das Kolbenelement angehoben und von der Filterabreinigungsposition in die Ruheposition zurückbefördert wird. Diese Aufwärtsbewegung des Kolbenelements wird sowohl durch den ansteigenden Druck im zweiten Ansaugteilkanal, als auch durch den sich verstärkenden Unterdruck im ersten Ansaugteilkanal gefördert. Denn durch den stärker werdenden Unterdruck im ersten Ansaugteilkanal wird das Kolbenelement in die Raumrichtung im Wesentlichen "nach oben" angesaugt, d.h. nach oben gesaugt, während das Kolbenelement durch den ansteigenden Druck im zweiten Ansaugteilkanal ebenfalls in die Raumrichtung nach oben, d.h. von dem Filter weg, gedrückt wird. Das Stoppelement des Kolbenelements sorgt vorzugsweise dafür, dass das Kolbenelement seine Ruheposition auf Höhe des Trennelements der Filterabreinigungseinheit wieder einnehmen kann. Selbstverständlich kann sich das Kolbenelement je nach Ausgestaltung der Filterabreinigungseinheit vorzugsweise auch in jede andere Raumrichtung bewegen.

Es ist im Sinne der Erfindung bevorzugt, die Ansaugteilkanäle abwechselnd zu öffnen und zu schließen, so dass je ein Ansaugteilkanal geöffnet und der andere Ansaugteilkanal geschlossen vorliegt. Es stellt einen wesentlichen Vorteil der Erfindung dar, dass durch das gezielte bzw. zeitlich versetzte Schalten, d.h. Öffnen und Schließen, der Ventileinheit bzw. ihrer Komponenten eine optimale Abfolge von Filterabreinigungsschritten vorgenommen werden kann. Insbesondere bietet die Erfindung die Möglichkeit, den Ansaugkanal der Filterabreinigungseinheit bzw. des Staubsaugers, der sich vorzugsweise zwischen Filter und Turbine erstreckt, in unterschiedliche Teilbereiche, die im Sinne der Erfindung bevorzugt als "Ansaugteilkanäle" bezeichnet werden, zu unterteilen. Dadurch können vorteilhafterweise unterschiedliche Druckverhältnisse in den Teilbereichen zueinander eingestellt und auf diese Weise eine optimale Filterabreinigung ermöglicht werden. Insbesondere kann somit eine steuerbare Filterabreinigung bereitgestellt werden. Es ist im Sinne der Erfindung bevorzugt, dass während eines Saugbetriebs des Staubsaugers der zweite Ansaugteilkanal im Wesentlichen offen vorliegt, während der erste Ansaugteilkanal im Wesentlichen geschlossen vorliegt.

Vorzugsweise kann die mindestens eine Ventileinheit aus zwei oder mehr Komponenten bestehen, die von einem ersten Einzelventil und einem zweiten Einzelventil gebildet werden, wobei die Einzelventile unabhängig voneinander ansteuerbar sind. Die Formulierung, dass die Einzelventile der mindestens einen Ventileinheit unabhängig voneinander ansteuerbar sind, bedeutet, dass es sich um grundsätzlich voneinander unabhängige, d.h. separate Einzelventile handelt, wobei je ein Einzelventil einem Ansaugteilkanal zugeordnet ist. Mit anderen Worten kann ein erstes Einzelventil dem ersten Ansaugteilkanal zugeordnet sein, während ein zweites Einzelventil dem zweiten Ansaugteilkanal zugeordnet werden kann. Vorzugsweise kann das erste Einzelventil dazu eingerichtet sein, den ersten Ansaugteilkanal freizugeben oder zu verschließen, während das zweite Einzelventil dazu eingerichtet ist, den zweiten Ansaugteilkanal freizugeben oder zu verschließen. Im Kontext der vorliegenden Erfindung werden die Einzelventile allerdings in dem Sinne aufeinander abgestimmt gesteuert, dass je ein Einzelventil geöffnet ist, während das andere Einzelventil geschlossen ist. Durch diese aufeinander abstimmte Ansteuerung der Einzelventile, die in dieser Ausgestaltung der Erfindung die Ventileinheit bilden, kann vorteilhafterweise das abwechselnde Öffnen und Schließen der mindestens zwei Ansaugkanäle bewirkt werden, so dass die optimierte und steuerbare Filterabreinigung gemäß der vorliegenden Erfindung bereitgestellt werden kann.

In einer anderen bevorzugten Ausgestaltung der Erfindung wird die mindestens eine Ventileinheit von einem ersten Flächenelement und einem zweiten Flächenelement gebildet, wobei die Flächenelemente über eine gemeinsame Achse miteinander verbunden sind. Die Flächenelemente sind vorzugsweise starr mit der gemeinsamen Achse verbunden, so dass sich die Flächenelemente gemeinsam bewegen, wenn beispielsweise die gemeinsame Achse gedreht wird. Die gemeinsame Achse ist insbesondere drehbar ausgebildet. Durch die Verbindung der Flächenelemente über die gemeinsame Achse erfolgt eine Bewegung der Flächenelemente aufeinander abgestimmt. Jedes der beiden Flächenelemente ist vorzugsweise einem der mindestens zwei Ansaugteilkanäle zugeordnet. Mit anderen Worten kann ein erstes Flächenelement dem ersten Ansaugteilkanal zugeordnet sein, während ein zweites Flächenelement dem zweiten Ansaugteilkanal zugeordnet werden kann. Vorzugsweise kann das erste Flächenelement dazu eingerichtet sein, den ersten Ansaugteilkanal freizugeben oder zu verschließen, während das zweite Flächenelement dazu eingerichtet sein, den zweiten Ansaugteilkanal freizugeben oder zu verschließen. Das Öffnen und/oder Schließen der Ansaugteilkanäle erfolgt in Abhängigkeit von einer Anordnung der Flächenelemente zueinander an der gemeinsamen Achse. Wenn die Flächenelemente beispielsweise um im Wesentlichen 90 ° zueinander versetzt vorliegen, kann die gemeinsame Achse der Ventileinheit so gedreht werden, dass ein Ansaugteilkanal im Wesentlichen vollständig verschlossen vorliegt, weil das entsprechende Flächenelement, das diesen Ansaugteilkanal zugeordnet ist, den entsprechenden Ansaugkanal im Wesentlichen vollständig verschließt. Der andere Ansaugkanal kann in dieser Ausführungsform der Erfindung und bei der beschriebenen Stellung der gemeinsamen Achse und bei einer Anordnung der Flächenelemente um im Wesentlichen 90 ° versetzt zueinander im Wesentlichen vollständig geöffnet vorliegen, weil das entsprechende Flächenelement, das diesem anderen Ansaugteilkanal zugeordnet ist, flach in dem Ansaugteilkanal vorliegt und einen Luftstrom durch den Ansaugteilkanal nicht oder kaum behindert. Die Flächenelemente liegen vorzugsweise wie Klappen in einer Ebene vor, so dass sie einen Ansaugteilkanal verschließen, wenn diese Ebene, die durch die Flächenelemente gebildet werden kann, einen Querschnitt des betroffenen Ansaugteilkanals im Wesentlichen vollständig abdichtet. Wenn die Flächenelemente um im Wesentlichen 90 ° zu dieser Verschluss-Stellung in dem Ansaugteilkanal vorliegen, wird vorteilhafterweise fast der gesamte Querschnitt des Ansaugteilkanals freigegeben, weil die Flächenelemente im Wesentlichen horizontal in einer Mittelebene des betroffenen Ansaugteilkanals liegen und so keinen Widerstand für einen durchströmenden Saugluftstrom darstellen.

Mathematisch gesprochen kann der Öffnungsgrad der beiden Ansaugteilkanäle bei Flächenelementen, die um im Wesentlichen 90 ° zueinander versetzt vorliegen, durch zwei Sinuskurven beschrieben werden, die um im Wesentlichen 90 ° zueinander versetzt verlaufen. In dem obigen Ausführungsbeispiel würde der vollständig verschlossene Ansaugteilkanal einem Nulldurchgang der entsprechenden Sinuskurve entsprechen und der Öffnungswinkel der Flächenelemente gegenüber einer virtuellen Zentralachse oder Mittelebene in dem entsprechenden Ansaugteilkanal liegt bei im Wesentlichen 0 °. Die dazu um im Wesentlichen 90 ° versetzt verlaufende Sinuskurve, die den Öffnungsgrad des anderen Ansaugteilkanals beschreibt, hat in dieser Stellung der gemeinsamen Achse ein Maximum, weil der Ansaugteilkanal in dieser Stellung der gemeinsamen Achse und der Flächenelemente maximal geöffnet vorliegt.

Es kann im Sinne der Erfindung auch bevorzugt sein, dass die mindestens eine Ventileinheit von einem Einzelventil gebildet wird, wobei das Einzelventil in mindestens einer ersten Position und einer zweiten Position vorliegt und wobei das Einzelventil in der ersten Position den ersten Ansaugteilkanal freigibt und den zweiten Ansaugteilkanal verschließt und wobei das Einzelventil in der zweiten Position den zweiten Ansaugteilkanal freigibt und den ersten Ansaugteilkanal verschließt. Das Einzelventil kann auch noch in einer dritten Position vorliegen, in der das Einzelventil zumindest teilweise sowohl den ersten, als auch den zweiten Ansaugteilkanal freigibt.

Es ist im Sinne der Erfindung bevorzugt, dass die Filterabreinigungseinheit ein Kolbenelement umfasst, wobei das Kolbenelement durch Einlassen von Umgebungsluft durch eine Außenöffnung der Filterabreinigungseinheit aus einer Ruheposition in Richtung des Filters der Filterabreinigungseinheit bewegbar ist. Vorzugsweise kann das Kolbenelement durch Einlassen von Umgebungsluft durch eine Außenöffnung in das Gehäuse der Filterabreinigungseinheit aus einer Ruheposition in Richtung des Filters der Filterabreinigungseinheit bewegt bzw. beschleunigt werden. Die Umgebungsluft, die zur Beschleunigung des Kolbenelements verwendet wird, kann im Sinne der Erfindung bevorzugt als Arbeitsluft bezeichnet werden. Im Vergleich zu herkömmlichen Filterabreinigungsverfahren wird bei der vorliegenden Erfindung der Filter nicht mit ungefilterter Außenluft beaufschlagt, sondern mit Arbeitsluft aus dem Inneren des Staubsaugers. Während des Saugbetriebs des Staubsaugers liegt das Kolbenelement vorzugsweise auf Höhe des Trennelements innerhalb der Filterabreinigungseinheit vor. Im Saugbetrieb kann beispielsweise der zweite Ansaugteilkanal geöffnet vorliegen, so dass von der Turbine ein Saugluftstrom erzeugt wird, der von dem Filter in Richtung der Turbine strömt. Während des Saugbetriebs des Staubsaugers liegt der erste Ansaugteilkanal vorzugsweise verschlossen vor. Das bedeutet für die unterschiedlichen Ausgestaltungen der Ventileinheit, dass während des Saugbetriebs im Falle der zwei Einzelventile das erste, obere Einzelventil geschlossen ist, während das zweite, untere Einzelventil geöffnet vorliegt. Im Falle, dass die Ventileinheit Flächenelemente aufweist, die über eine gemeinsame Achse miteinander verbunden vorliegen, liegt das erste, obere Flächenelement so in dem ersten Ansaugteilkanal vor, dass es diesen im Wesentlichen vollständig verschließt, während das zweite, untere Flächenelement so in dem zweiten Ansaugteilkanal vorliegt, dass es diesen im Wesentlichen vollständig freigibt. In dem Fall, dass die Ventileinheit ein Einzelventil aufweist, das in mindestens zwei Positionen vorliegen kann, liegt das Einzelelement während des Saugbetriebs des Staubsaugers in seiner zweiten Position vor, in der das Einzelventil den zweiten Ansaugteilkanal freigibt und den ersten Ansaugteilkanal verschließt.

Durch die Stellung der Ventileinheit bzw. durch die Positionen und Anordnungen der Elemente der Ventileinheit wird im Saugbetrieb ermöglicht, dass ein Saugluftstrom vom Filter in Richtung der Turbine strömt. Dieser Strömungsweg wird auch nicht von dem Kolbenelement versperrt, da das Kolbenelement auf Höhe des Trennelements angeordnet ist, wobei das Trennelement dazu eingerichtet ist, den Ansaugkanal in die einzelnen Ansaugteilkanäle zu unterteilen bzw. zu untergliedern. Die Position des Kolbenelements auf Höhe des Trennelements der Filterabreinigungseinheit wird im Sinne der Erfindung bevorzugt als Ausgangs- oder Ruheposition des Kolbenelements bezeichnet.

Wenn nun eine Filterabreinigung durchgeführt werden soll, kann Umgebungsluft durch eine Außenöffnung in dem Gehäuse der Filterabreinigungseinheit eingelassen werden. Da im Inneren der Filterabreinigungseinheit bzw. im Inneren des Staubsaugers ein Unterdruck herrscht, wird durch Öffnen der Außenöffnung ein größerer Schwall Außenluft mit hoher Wucht in den Staubsauger bzw. die Filterabreinigungseinheit eingesaugt. Dieser Schwall Außenluft drückt das Kolbenelement aus seiner Ausgangsposition in einer Raumrichtung "nach unten", d.h. in Richtung des Filters der Filterabreinigungseinheit bzw. des Staubsammelbehälters. An seinen Seiten liegt das Kolbenelement eng an den Innenwänden des Gehäuses der Filterabreinigungseinheit an, so dass durch die ruckartige Bewegung des Kolbenelements in Richtung des Filters ein Polster aus verdichteter Luft entsteht, wobei dieses Luftpolster durch das Kolbenelement in Richtung des Filters gedrückt bzw. geschoben wird. Das beschleunigte Poster aus verdichteter Luft kann einen Druckstoß auf den Filter ausüben, so dass der Filter mechanisch erschüttert wird, wenn der Filter von dem Luftpolster erreicht wird. Durch diese mechanische Erschütterung wird etwaiger, vorhandener Staub oder Filterkuchen von dem Filter gelöst oder abgeklopft, so dass der Filter gereinigt bzw. abgereinigt wird. Der losgelöste Staub und der losgelöste Filterkuchen können in den Staubsammelbehälter des Staubsaugers fallen, wobei der Staubsammelbehälter des Staubsaugers vorzugsweise unterhalb des Filters angeordnet vorliegt und daher gut dazu geeignet ist, den Staub und den Filterkuchen aufzunehmen.

Es kann im Sinne der Erfindung bevorzugt sein, dass das vorgeschlagene Abreinigungsverfahren eine Kombination aus mechanischer Erschütterung und einem Rückspülen des Filters darstellt, wobei zum Rückspülen des Filters vorteilhafterweise keine Außenluft, sondern gefilterte Prozessluft aus dem Inneren des Staubsaugers verwendet wird. Es kann aber im Sinne der Erfindung auch bevorzugt sein, dass das Kolbenelement den Filter nicht berührt, so dass gerade keine mechanische Abreinigung in dem Sinne vorliegt, dass ein Gegenstand den Filter ausklopft oder durchrüttelt. Stattdessen wird der Filter von dem Luftpolster mechanisch erschüttert, wobei das Luftpolster durch das rasche, schwallartige Eindringen der Außenluft und die dadurch bewirkte ruckartige Bewegung des Kolbenelements in Richtung des Filters beschleunigt wird, so dass der Luftpolster eine starke Impulswirkung auf den Filter ausüben kann.

Es ist im Sinne der Erfindung bevorzugt, dass die durch die Außenöffnung des Staubsaugers einströmende Umgebungsluft zur Beschleunigung des Kolbenelements verwendet wird, und nicht, wie bei vielen Staubsaugern, die aus dem Stand der Technik bekannt sind, als Spülluft für den Filter des Staubsaugers.

Das Kolbenelement kommt vielmehr nach seiner ruckartigen Bewegung in einer Filterabreinigungsposition zum Stehen. Das Kolbenelement kann beispielsweise von einer zentralen Linearführung geführt werden, wobei die zentrale Linearführung die Auf- und Abbewegung des Kolbenelements ermöglicht. Um die zentrale Linearführung herum kann das Kolbenelement Stoppelemente aufweisen, durch die die Filterabreinigungsposition des Kolbenelements festgelegt werden kann. Die Stoppelement können einen Abstand zwischen Filter und Unterseite des Kolbenelements definieren, wobei das Kolbenelement in diesem Abstand vor dem Filter zu stehen kommt und dort seine Filterabreinigungsposition einnimmt.

Durch die ruckartige Abwärtsbewegung des Kolbenelements aus seiner Ruhe- in die Filterabreinigungsposition überfährt das Kolbenelement den zweiten Ansaugteilkanal, so dass dadurch der Filter und die Turbine fluidisch voneinander entkoppelt werden. Mit anderen Worten besteht nach der Entkopplung von Turbine und Filter kein Saugstrom mehr zwischen Filter und Turbine, wobei eine solche Entkopplung die Filterabreinigungswirkung des beschleunigten Polsters aus komprimierter Luft erheblich verbessern kann. Somit treffen durch die Ausgestaltung der Filterabreinigungseinheit und durch die Anordnung und das Zusammenwirken ihrer Komponenten mehrere Effekte synergistisch zusammen, um eine optimale Abreinigung eines Filters in einem Staubsauger zu ermöglichen. Zum einen wird der Filter durch das Polster aus komprimierter Luft, das durch Einlassen der Außenluft und die dadurch hervorgerufene Abwärtsbewegung des Kolbenelements, abgereinigt. Zum anderen wird diese Abreinigung vorteilhafterweise dadurch unterstützt, dass durch die Abwärtsbewegung des Kolbenelements eine Entkopplung von Turbine und Filter bewirkt wird, die die Durchführung der Filterabrenigung erheblich vereinfacht und die Filterebreinigungswirkung deutlich verstärkt.

Das vorgeschlagene Verfahren und die vorliegende Filterabreinigungseinheit sind dadurch gekennzeichnet, dass gerade keine Außenluft verwendet wird, um den Filter des Staubsaugers zu beaufschlagen und durch- oder rückzuspülen. Vielmehr wird im Kontext der vorliegenden Erfindung die Außenluft verwendet, um ein Kolbenelement aus einer Ruheposition stark zu beschleunigen, so dass ein Luftpolster gebildet wird, welches seinerseits eine mechanische Erschütterung des Filters bewirkt. Es ist im Sinne der Erfindung bevorzugt, dass die Außenluft selbst mit dem Filter nicht in Berührung kommt. Dies wird durch den engen Kontakt des Kolbenelements mit den Innenwänden des Gehäuses der Filterabreinigungseinheit sichergestellt. Die Dichtwirkung des engen Kontakts kann durch die Vorsehung von Dichtmitteln, wie Dichtlippen oder dergleichen, weiter verbessert werden. In diesem Fall können die Dichtmittel an den Außenseiten des Kolbenelements angeordnet vorliegen, um den Ansaugkanal oberhalb des Filters gegenüber der Oberseite des Kolbenelements abzudichten und einen Kontakt zwischen Außenluft und Filter zu vermeiden. Solche Dichtmittel werden im Sinne der Erfindung als radiale Dichtmittel bezeichnet. Es können aber auch axiale Dichtmittel vorgesehen sein, um eine hohe Dynamik zu ermöglichen und in den Kolbenendlagen eine Dichtwirkung zu erzeugen. Die Formulierung "hohe Dynamik" bedeutet im Sinne der Erfindung bevorzugt, dass das Kolbenelement schnell durch die einströmende Außenluft beschleunigt werden kann. Dies wird insbesondere dadurch ermöglicht, dass axiale Dichtmittel verwendet werden, die keine Reibung zwischen Kolbenelement und Seitenwänden der Filterabreinigungseinheit erzeugen. Durch die Dichtwirkung der axialen Dichtmittel in den Endlagen des Kolbenelements kann eine besonders gute strömungstechnische Abkopplung des Filters von der Turbine des Staubsaugers erreicht werden. Die Kolbenendlage liegt insbesondere dann vor, wenn das Kolbenelement in der Filterabreinigungsposition vorliegt.

Die vorliegende Filterabreinigungseinheit und das vorgeschlagene Verfahren sind vorzugsweise durch eine direkte fluidische Verbindung zwischen dem Filter und der Turbine gekennzeichnet, wenn sich der Staubsauger im Saugbetrieb befindet und der zweite Ansaugteilkanal geöffnet vorliegt.

Durch diese direkte fluidische Verbindung zwischen dem Filter und der Turbine im Saugbetrieb des Staubsaugers und dadurch, dass der Filter gerade nicht mit Außenluft beaufschlagt oder durchspült wird, wendet sich die Erfindung gezielt vom Stand der Technik ab, in der die Filter der Staubsauger üblicherweise mit Außenluft beaufschlagt werden, um sie sauber zu spülen und dadurch abzureinigen. Im Kontext der vorliegenden Erfindung wird die rasch eindringende Außenluft vorteilhafterweise dazu verwendet, das Kolbenelement in Richtung Filter zu beschleunigen, so dass sich das Kolbenelement ruckartig in Richtung des Filters bewegt und dabei das Luftpolster aus komprimierter Prozessluft bildet, mit dem der Filter mechanische erschüttert wird. Der Begriff "Prozessluft" wird im Sinne der Erfindung für solche Luft verwendet, die im Inneren des Staubsaugers vorhanden ist bzw. vorliegt. Die Prozessluft ist gerade nicht gleichzusetzen mit der aus der Umgebung des Staubsaugers durch die Außenöffnung in den Staubsauger eindringende Außenluft, die dazu verwendet wird, das Kolbenelement in Richtung des Filters des Staubsaugers zu beschleunigen.

Es ist im Sinne der Erfindung bevorzugt, dass die Außenöffnung der Filterabreinigungseinheit ein Außenventil aufweist, wobei das Außenventil dazu eingerichtet ist, die Außenöffnung der Filterabreinigungseinheit freizugeben oder zu verschließen. Es ist im Sinne der Erfindung bevorzugt, das Außenventil vorzugsweise auch als Arbeitsventil der Filterabreinigungseinheit zu bezeichnen.

Es ist im Sinne der Erfindung darüber hinaus bevorzugt, dass der Filterabreinigungsprozess durch ein Öffnen der Außenöffnung der Filterabreinigungseinheit gestartet wird. Die Außenöffnung der Filterabreinigungseinheit kann ein Außen- oder Arbeitsventil aufweisen, wobei das Außenventil dazu eingerichtet ist, die Außenöffnung der Filterabreinigungseinheit freizugeben oder zu verschließen. Im Saugbetrieb des Staubsaugers liegt das Außenventil vorzugsweise geschlossen vor, so dass keine Außenluft in die Filterabreinigungseinheit oder in den Staubsauger eindringen kann. Dies ist wichtig, weil in der Filterabreinigungseinheit bzw. im Staubsauger ein Unterdruck herrscht, der dazu verwendet wird, Staub, Dreck oder Schmutz durch einen Saugschlauch in das Innere des Staubsaugers einzusaugen. Der Staub, Dreck oder Schmutz kann dann in einem Schmutz- oder Staubsammelbehälter gesammelt und bis zu einer nächsten Leerung des Schmutz- oder Staubsammelbehälters aufbewahrt werden. Der Unterdruck, der während des Saugbetriebs des Staubsaugers herrscht, wird vorzugsweise von der Turbine erzeugt. Die Turbine kann vorzugsweise von einem Motor, bevorzugt einem Elektromotor, angetrieben werden. Der Staubsauger kann vorzugsweise über einen Netzanschluss mit elektrischer Energie versorgt werden. Es kann im Sinne der Erfindung auch bevorzugt sein, dass der Staubsauger ein akkubetriebener Staubsauger ist und von einer aufladbaren Energieversorgungsvorrichtung mit elektrischer Energie versorgt wird.

Wenn sich Schmutz im Filter gefangen hat und sich ggf. ein fester Filterkuchen in dem Filter des Staubsaugers ausgebildet ist, kann sich nachteiligerweise die Saugleistung des Staubsaugers reduzieren. Es ist daher in regelmäßigen Abständen eine Filterabreinigung durchzuführen, durch die der Filter von Staub, Dreck, Schmutz oder festgebackenem Filterkuchen befreit werden kann.

Diese Filterabreinigung kann durch ein Öffnen des Außenventils initiiert werden, wobei durch das Eindringen der Außenluft das Kolbenelement im Inneren der Filterabreinigungseinheit in Richtung des Filters beschleunigt werden kann. Mit anderen Worten kann die Außenöffnung der Filterabreinigungseinheit geöffnet werden, um eine Filterabreinigung bzw. einen Filterabreinigungsprozess in Gang zu setzen.

Es ist im Sinne der Erfindung bevorzugt, dass das Kolbenelement durch eine Betätigung der Ventileinheit in seine Ruheposition zurückgeholt wird. Vorzugsweise kann das Kolbenelement durch ein Öffnen des ersten Ansaugteilkanals und durch ein Schließen des zweiten Ansaugteilkanals in seine Ruheposition zurückgeholt werden. Das Zurückholen des Kolbenelements aus seiner Filterabreinigungsposition in seine Ruheposition erfolgt insbesondere dadurch, dass der zweite Ansaugteilkanal, der während des Saugbetriebs geöffnet ist, geschlossen wird, und der erste Ansaugteilkanal, der während des Saugbetriebs des Staubsaugers geschlossen ist, geöffnet wird.

Es ist im Sinne der Erfindung bevorzugt, dass die Filterabreinigungseinheit einen Magneten umfasst, wobei der Magnet dazu eingerichtet ist, das Kolbenelement in seiner Ruheposition zu halten. Der Magnet kann beispielsweise als Dauermagnet ausgebildet sein, um Energie zu sparen. Es ist allerdings auch eine Ausbildung als Elektromagnet vorstellbar.

Das bedeutet für die unterschiedlichen Ausgestaltungen der Ventileinheit, dass im Falle, dass die Ventileinheit zwei Einzelventile umfasst, das erste, obere Einzelventil geöffnet wird, während das zweite, untere Einzelventil geschlossen wird. Im Falle, dass die Ventileinheit Flächenelemente aufweist, die über eine gemeinsame Achse miteinander verbunden vorliegen, wird die gemeinsame Achse so gedreht, dass das erste, obere Flächenelement so in dem ersten Ansaugteilkanal vor, dass es diesen im Wesentlichen vollständig freigibt, während das zweite, untere Flächenelement so in dem zweiten Ansaugteilkanal vorliegt, dass es diesen im Wesentlichen vollständig verschließt. In dem Fall, dass die Ventileinheit ein Einzelventil aufweist, das in mindestens zwei Positionen vorliegen kann, liegt das Einzelelement während der Abreinigung des mindestens einen Filters des Staubsaugers in seiner ersten Position vor, in der das Einzelventil den ersten Ansaugteilkanal freigibt und den zweiten Ansaugteilkanal verschließt.

Nach dem Eindringen der Außenluft in die Filterabreinigungseinheit und nach der Abwärtsbewegung des Kolbenelements in Richtung des Filters, liegt das Kolbenelement in seiner Filterabreinigungsposition vor, d.h. in räumlicher Nähe zum Filter, wobei ein Abstand zwischen dem Kolbenelement und dem Filter von Stoppelementen des Kolbenelements festgelegt werden kann. Je nach Ausgestaltung der Filterabreinigungseinheit kann das Kolbenelement auch so in der Filterabreinigungsposition angeordnet vorliegen, dass sich das Kolbenelement vorwärts- und rückwärts, also beispielsweise seitlich, bewegt.

Wenn der zweite Ansaugteilkanal für die Filterabreinigung geschlossen wird und der erste Ansaugteilkanal für die Filterabreinigung geöffnet wird, ändern sich die Druckverhältnisse im Ansaugkanal wie folgt: Durch das Umschalten der Ventileinheit und das Öffnen des ersten Ansaugkanals sinkt der Druck im ersten Ansaugteilkanal, während der Druck im zweiten Ansaugteilkanal durch die fehlende Absaugung durch die Turbine ansteigt.

Durch den stärker werdenden Unterdruck im ersten, oberen Ansaugteilkanal und durch den ansteigenden Druck im zweiten Ansaugteilkanal wird das Kolbenelement angehoben, quasi vom Unterdruck im ersten Ansaugteilkanal angesaugt, und dadurch zurück in seine Ruheposition bewegt. Das Kolbenelement kann auch auf seiner Oberseite Stoppelemente aufweisen, die in Zusammenwirken mit der zentralen Linearführung des Kolbenelements dafür Sorge tragen, dass das Kolbenelement seine Ruheposition in Höhe des Trennelements zwischen den Ansaugteilkanälen einnehmen kann.

In einem zweiten Aspekt betrifft die Erfindung einen Staubsauger mit einer erfindungsgemäßen Filterabreinigungseinheit. In einem weiteren Aspekt betrifft die Erfindung ein Verfahren zum Abreinigen eines Filters eines solchen Staubsaugers, wobei das Verfahren durch die folgenden Schritte gekennzeichnet ist:
a) Bereitstellung eines erfindungsgemäßen Staubsaugers,
b) Betrieb des Staubsaugers, wobei in einem Saugbetrieb des Staubsaugers der erste Ansaugteilkanal geschlossen und der zweite Ansaugteilkanal geöffnet vorliegt und wobei in einem Saugbetrieb des Staubsaugers ein Kolbenelement in einer Ruheposition vorliegt,
c) Start eines Filterabrenigungsvorgangs durch Öffnen einer Außenöffnung des Staubsaugers, so dass Umgebungsluft in den Staubsauger eindringen kann,
d) Erzeugung eines indirekten Abreinigungsimpulses durch die einströmende Umgebungsluft,
e) Abreinigung des Filters des Staubsaugers durch den indirekten Abreinigungsimpuls.

Mit dem vorgeschlagenen Abreinigungsverfahren kann eine wirksame, leistungsstarke und bedarfsgerechte Filterabreinigung bereitgestellt werden, die insbesondere steuerbar ist. Ein besonderer Vorteil der Erfindung besteht darin, dass die Komponenten der Filterabreinigungseinheit auf sehr zweckmäßige Weise zu einander angeordnet sind und gut durchdacht zusammenwirken, um die verschiedenen Bewegungen der Komponenten und der sich darauf ergebenden Positions- und Druckänderungen optimal zu nutzen, um eine verbesserte Filterabreinigung für einen Filter eines Staubsaugers, insbesondere eines Bausaugers, bereitzustellen. Die für die Filterabreinigungseinheit beschriebenen Definitionen, technischen Wirkungen und Vorteile gelten für das vorgeschlagene Filterabreinigungsverfahren und den Staubsauger, der eine erfindungsgemäße Filterabreinigungseinheit aufweist, analog.

Es ist im Sinne der Erfindung bevorzugt, dass der Staubsauger zur Durchführung des obigen Abreinigungsverfahrens ein Kolbenelement aufweist, wobei das Kolbenelement in einem Saugbetrieb des Staubsaugers in einer Ruheposition vorliegt und durch einströmende Umgebungsluft von der Ruheposition in eine Filterabreinigungsposition überführbar ist, wobei die Bewegung des Kolbenelements den indirekten Impuls zur Abreinigung des Filters bewirkt. Vorzugsweise kann das Kolbenelement aus der Filterabreinigungsposition in die Ruheposition durch ein Öffnen des ersten Ansaugteilkanals und durch ein Schließen des zweiten Ansaugteilkanals zurückgeholt werden.

Es ist im Sinne der Erfindung bevorzugt, dass der Staubsauger in einen Saugbetrieb zurücckehrt, indem der erste Ansaugteilkanal geschlossen der zweite Ansaugteilkanal geöffnet wird. Vorzugsweise kann auch das Kolbenelement auf diese Weise aus der Filterabreinigungsposition in die Ruheposition zurückgeholt werden, um einen neuerlichen Saugbetrieb des Staubsaugers zu ermöglichen und den Filterabreinigungsprozess zu beenden.

Es ist im Sinne der Erfindung bevorzugt, dass das Kolbenelement mindestens einen Kolben umfasst oder von mindestens einem Kolben gebildet wird. Es ist im Sinne der Erfindung ebenso bevorzugt, dass die Ventileinheit mindestens ein Ventil umfasst oder von mindestens einem Ventil gebildet wird. Darüber hinaus kann das Trennelement mindestens ein Trennobjekt, wie eine Trennwand, umfassen oder von mindestens einem Trennobjekt, wie einer Trennwand, gebildet werden. Die Flächenelemente, die in einer bevorzugten Ausführungsform der Erfindung die Ventileinheit bilden, können flächige Objekte umfassen oder von flächig ausgebildeten Objekten gebildet werden. Es kann sich dabei vorzugsweise um drehbare Klappen handeln, die über eine gemeinsame Achse miteinander verbunden sind und in den Ansaugteilkanälen angeordnet vorliegen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Seitenansicht einer bevorzugten Ausgestaltung der Filterabreinigungseinheit mit einer Ventileinheit, die zwei Einzelventile umfasst
- Fig. 2: schematische Seitenansicht einer bevorzugten Ausgestaltung der Filterabreinigungseinheit mit einer Ventileinheit, die zwei Flächenelemente umfasst
- Fig. 3: schematische Seitenansicht einer bevorzugten Ausgestaltung der Filterabreinigungseinheit mit einer Ventileinheit, die ein Einzelventil umfasst, das in zwei Positionen vorliegen kann

### Ausführungsbeispiele und Figurenbeschreibung:

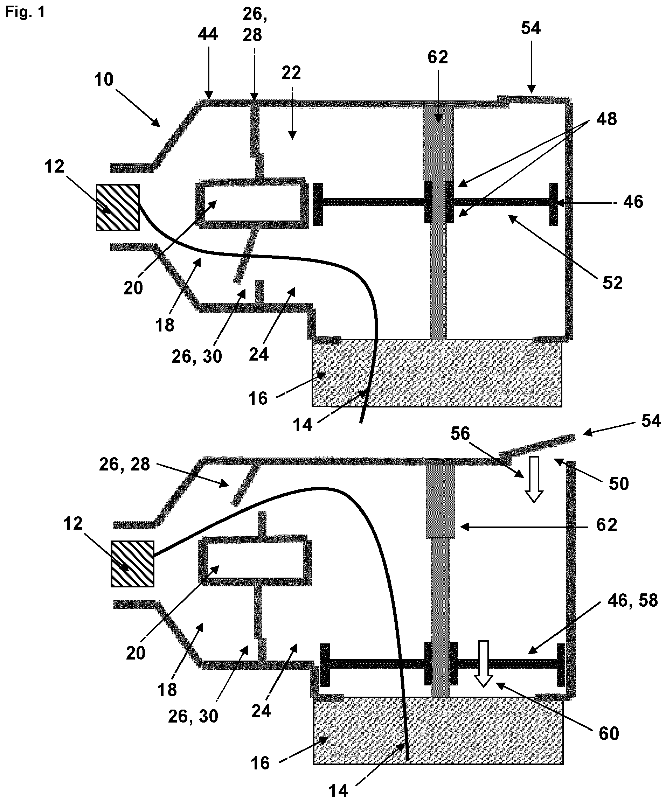

Fig. 1 zeigt eine Seitenansicht einer bevorzugten Ausgestaltung der Filterabreinigungseinheit 10 mit einer Ventileinheit 26, die zwei Einzelventile 28, 30 umfasst. Die Filterabreinigungseinheit 10 weist eine Turbine 12 und einen Filter 16 auf, wobei ein Saugluftstrom 14 von der Turbine 12 erzeugt werden kann und von einem Schmutzsammelbehälter (nicht dargestellte) des Staubsaugers (nicht dargestellt) kommend in Richtung der Turbine 12 strömt. Der obere Teil von Figur 1 zeigt die Filterabreinigungseinheit 10 in einem Saugbetrieb des Staubsaugers, wobei in dem Saugbetrieb das erste Einzelventil 28 der Ventileinheit geschlossen vorliegt und das zweite Einzelventil 30 der Ventileinheit 26 geöffnet ist. Der Saugluftstrom 14 fliesst somit durch den zweiten Ansaugteilkanal 24 vom Filter 16 in Richtung der Turbine 12. Der zweite Ansaugteilkanal 24 stellt vorzugsweise den kürzesten Strömungspfad und die direkteste Verbindung zwischen Turbine 12 und Filter 16 dar. Der Raum zwischen Turbine 12 und Filter 16 wird als Ansaugkanal 18 bezeichnet, wobei der Ansaugraum 18 von einem Trennelement 20 in einzelne Teilbereiche 22, 24 unterteilt werden kann. In dem in Fig. 1 dargestellten Ausführungsbeispiel der Erfindung stellen der erste Ansaugteilkanal 22 und der zweite Ansaugteilkanal 24 die Teilbereiche des Ansaugkanals 18 zwischen Turbine 12 und Filter 16 der Filterabreinigungseinheit 10. Die Filterabreinigungseinheit 10 kann von einem Gehäuse 44 umgeben sein.

In dem in der oberen Hälfte von Fig. 1 dargestellten Saugbetrieb des Staubsaugers ist ein Außenventil 54 der Filterabreinigungseinheit 10 geschlossen. Das Außenventil 54 verschließt eine Außenöffnung 50, die im Gehäuse 44 der Filterabreinigungseinheit 10 oder an einer Außenwand des Staubsaugers vorliegt und eine fluidische Verbindung zwischen dem Inneren des Staubsaugers bzw. der Filterabreinigungseinheit 10 und der Umgebung des Staubsaugers darstellt.

Die Filterabreinigungseinheit 10 weist darüber hinaus ein Kolbenelement 46 auf, das entlang einer Linearführung 62 eine Auf- und Abwärtsbewegung durchführen kann. Die Linearführung 62 kann vorzugsweise auch als Axialführung bezeichnet werden. Die Linear- oder Axialführung 62 kann in Bezug auf das Kolbenelement 46 zentral angeordnet sein. Es kann aber im Sinne der Erfindung auch bevorzugt sein, dass die Linearführung 62 von seitlichen Führungen gebildet wird. Das Kolbenelement 46 kann Stoppelemente 48 aufweisen, die eine Auf- oder Abwärtsbewegung des Kolbenelemente 46 stoppen können. In dem in der oberen Hälfte von Fig. 1 dargestellten Saugbetrieb des Staubsaugers liegt das Kolbenelement 46 in einer Ruheposition 52 vor, wobei die Ruheposition 52 in etwa auf Höhe des Trennelements 20 der Filterabreinigungseinheit 10 liegt.

In der unteren Hälfte von Fig. 1 wird eine Situation während der Abreinigung des Filters 16 des Staubsaugers dargestellt. Ein Filterabreinigungsvorgang kann durch Öffnen des Außenventils 54 initiiert werden, so dass Umgebungsluft 56 in das Innere des Staubsaugers bzw. der Filterabreinigungseinheit 10 einströmt. Durch die einströmenden Umgebungsluft 56 wird das Kolbenelement 46 aus seiner Ruheposition 52 in eine Filterabreinigungsposition 58 verschoben, wobei diese Verschiebung aufgrund der Wucht der einströmenden Umgebungsluft 56 schlagartig erfolgt. Durch die schlagartige Abwärtsbewegung des Kolbenelements 46 wird ein Abreinigungsimpuls 60 erzeugt, der auf den Filter 16 wirkt und den Filter 16 abreinigt. Insbesondere wird von dem Kolbenelement 46 bei seiner Abwärtsbewegung in Richtung des Filters 16 ein Luftpolster vor sich hergeschoben, welches die Abreinigung des Filters 16 bewirkt, wobei durch den Abreinigungsimpuls 60 insbesondere eine mechanische Erschütterung bzw. ein Durchströmen des Filters 16 in Richtung des Staubsammelbehälter bewirkt wird.

Durch die Abwärtsbewegung des Kolbenelements 46 und seine dadurch bedingte Positionsänderung von der Ruheposition 52 in die Filterabreinigungsposition 58 überfährt das Kolbenelement 46 den zweiten Ansaugteilkanal 24, so dass es zu einer strömungstechnischen Entkopplung des Filters 16 von der Turbine 12 kommt. Dadurch kann die Wirkung der Abreinigung weiter verbessert werden.

Das Kolbenelement 46 kann durch ein Umschalten der Ventileinheit 26 zurück in seine Ruheposition 52 auf Höhe des Trennelements 20 der Filterabreinigungseinheit 10 befördert werden. Dabei wird das erste Einzelventil 28 der Ventileinheit 26 geöffnet und dadurch der erste Absaugteilkanal 22 geöffnet, während das zweite Einzelventil 30 der Ventileinheit 26 geschlossen und dadurch der zweite Absaugteilkanal 24 verschlossen wird.

Auch wenn in den Figuren keine strömungstechnisch vollständige Entkopplung von Filter 16 und Turbine 12 dargestellt ist, ist es im Sinne der Erfindung bevorzugt, dass der Filter 16 strömungstechnisch im Wesentlichen vollständig von der Turbine 12 und dem Ansaugkanale 18 entkoppelt, d.h. abgetrennt, ist. Dazu kann der in den Figuren sichtbaren Spalt, der in der Filterabreinigungsposition 58 des Kolbenelements 46 zwischen Kolbenelement 46 und Gehäuse 44 der Filterabreinigungseinheit 10 vorliegt, durch entsprechende Dichtmittel abgedichtet bzw. verschlossen werden.

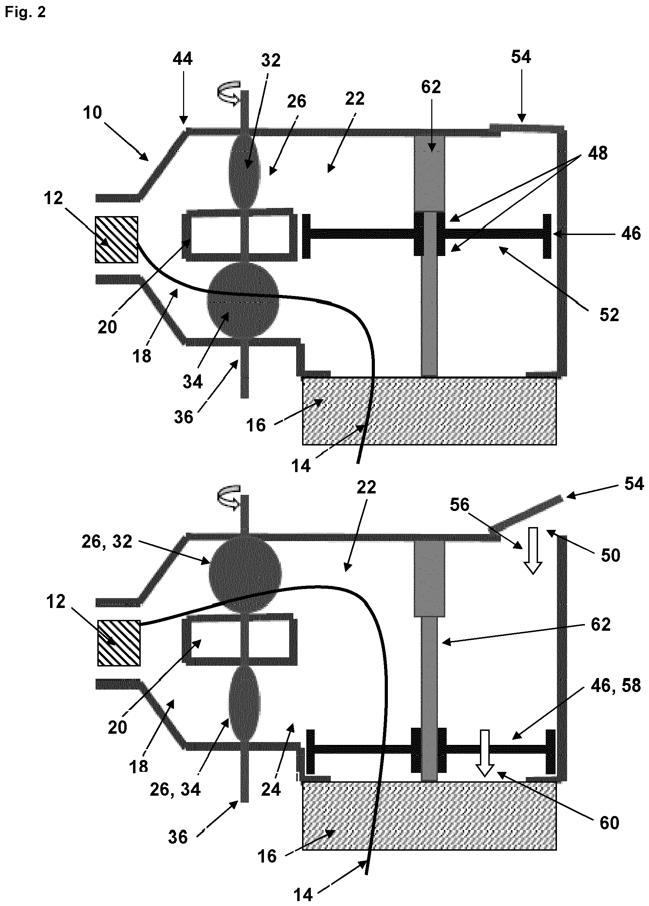

Figur 2 zeigt eine schematische Seitenansicht einer bevorzugten Ausgestaltung der Filterabreinigungseinheit 10 mit einer Ventileinheit 26, die zwei Flächenelemente 32, 34 umfasst. In der oberen Bildhälfte ist erneut der Saugbetrieb des Staubsaugers abgebildet, während in der unteren Bildhälfte eine Situation während der Abreinigung des Filters 16 des Staubsaugers dargestellt wird. Die Ventileinheit 26, die in Fig. 2 abgebildet ist, weist ein erstes Flächenelement 32 und ein zweites Flächenelement 34 auf, wobei die beiden Flächenelemente 32, 34 über eine gemeinsame Achse 36 miteinander verbunden sind. In der oberen Bildhälfte, in der der Saugbetrieb des Staubsaugers abgebildet ist, liegt das erste Flächenelement 32 der Ventileinheit 26 so in dem ersten Ansaugteilkanal 22 vor, dass es diesen im Wesentlichen vollständig verschließt. In dem zweiten Ansaugteilkanal 24 liegt das zweite Flächenelement 34 horizontal angeordnet vor, so dass es den zweiten Ansaugkanal 24 im Wesentlichen freigibt und der Saugluftstrom 14 durch den zweiten Ansaugteilkanal 24 von dem Filter 16 zur Turbine 12 fließen kann.

In der unteren Bildhälfte, in der eine Situation während der Abreinigung des Filters 16 des Staubsaugers dargestellt ist, liegt das erste Flächenelement 32 der Ventileinheit 26 so in dem ersten Ansaugteilkanal 22 vor, dass es diesen im Wesentlichen vollständig freigibt. In dem zweiten Ansaugteilkanal 24 liegt das zweite Flächenelement 34 nun so angeordnet vor, so dass es den zweiten Ansaugkanal 24 im Wesentlichen vollständig verschließt. Der Saugluftstrom 14 strömt nun durch den ersten Ansaugteilkanal 22 von dem Filter 16 zur Turbine 12. Die gemeinsame Achse 36 der Ventileinheit 26 ist vorzugsweise drehbar gelagert, während die Flächenelemente 32, 34 starr mit der gemeinsamen Achse 36 verbunden sind. Eine Bewegung, d.h. Rotation, der gemeinsamen Achse 36 führt vorzugsweise dazu, dass sich beide Flächenelemente 32, 34 der in Fig. 2 abgebildeten Ventileinheit 26 gemeinsam bewegen.

Die Funktionsweise des Außenventils 54 und des Kolbenelements 46 entspricht in dem in Fig. 2 dargestellten Ausführungsbeispiel der Erfindung der Funktionsweise, die bereits hinsichtlich Fig. 1 beschrieben wurde.

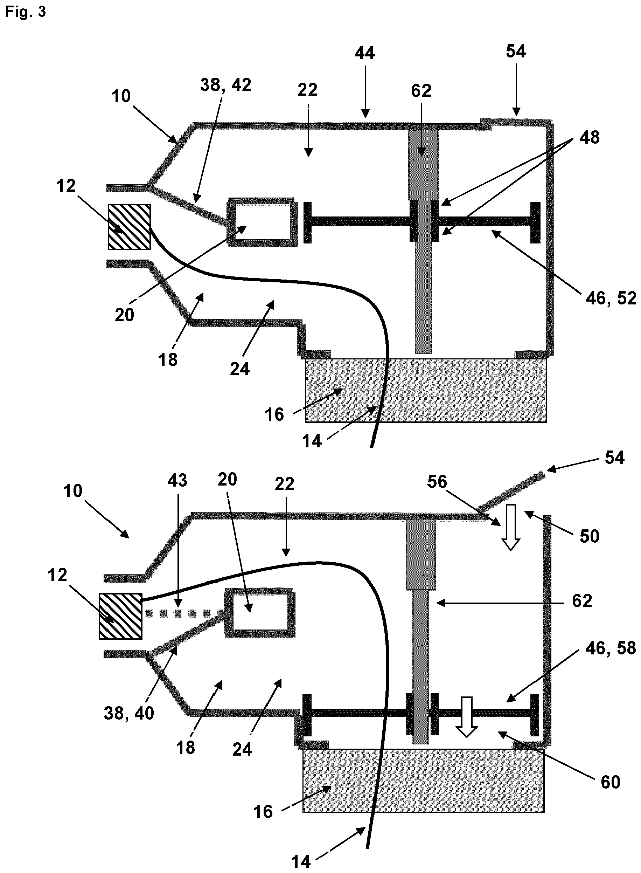

Figur 3 zeigt eine schematische Seitenansicht einer bevorzugten Ausgestaltung der Filterabreinigungseinheit 10 mit einer Ventileinheit 26, die ein Einzelventil 38 umfasst, das in zwei Positionen 40, 42 vorliegen kann. In der oberen Bildhälfte von Fig. 3 ist der Saugbetrieb des Staubsaugers abgebildet, während in der unteren Bildhälfte von Fig. 3eine Situation während der Abreinigung des Filters 16 des Staubsaugers dargestellt wird. Die Ventileinheit 26, die in Fig. 3 abgebildet ist, weist ein Einzelventil 38 auf, das mindestens in einer ersten Position 40 und in einer zweiten Position 42 vorliegen kann. Das Einzelventil 38 kann auch eine dritte Position 43 einnehmen, in der beide Ansaugteilkanale 22, 24 zumindest teilweise freigegeben werden. In der ersten Position 40 des Einzelventils 38 wird der erste Ansaugteilkanal 22 freigegeben und der zweite Ansaugteilkanal 24 verschlossen, während in der zweiten Position 42 des Einzelventils 38 der erste Ansaugteilkanal 22 verschlossen und der zweite Ansaugteilkanal 24 freigegeben wird. Somit kann der Saugluftstrom 14 in der ersten Position 40 des Einzelventils 38 durch den ersten Ansaugteilkanal 22 strömen, während der Saugluftstrom 14 in der zweiten Position 42 des Einzelventils 38 durch den zweiten Ansaugteilkanal 24 strömt.

Die Funktionsweise des Außenventils 54 und des Kolbenelements 46 entspricht in dem in Fig. 3 dargestellten Ausführungsbeispiel der Erfindung der Funktionsweise, die bereits hinsichtlich der Fig. 1 und 2 beschrieben wurde.

### Bezugszeichenliste

- 10: Filterabreinigungseinheit
- 12: Turbine
- 14: Saugluftstrom
- 16: Filter
- 18: Ansaugkanal
- 20: Trennelement
- 22: erster Ansaugteilkanal
- 24: zweiter Ansaugteilkanal
- 26: Ventileinheit
- 28: erstes Einzelventil
- 30: zweites Einzelventil
- 32: erstes Flächenelement
- 34: zweites Flächenelement
- 36: gemeinsame Achse
- 38: Einzelventil
- 40: erste Position
- 42: zweite Position
- 43: dritte Position
- 44: Gehäuse der Filterabreinigungseinheit
- 46: Kolbenelement
- 48: Stoppelemente
- 50: Außenöffnung
- 52: Ruheposition
- 54: Außenventil
- 56: Umgebungsluft
- 58: Filterabreinigungsposition
- 60: Abreinigungsimpuls
- 62: Linearführung

## Patentansprüche

1. Filterabreinigungseinheit (10) für einen Staubsauger, insbesondere einen Bausauger, wobei der Staubsauger eine Turbine (12) zu Erzeugung eines Saugluftstroms (14) umfasst, sowie einen Filter (16) zum Filtern des Saugluftstroms (14),
**dadurch gekennzeichnet, dass**
zwischen der Turbine (12) und dem Filter (16) ein Ansaugkanal (18) vorgesehen ist, wobei der Ansaugkanal (18) durch ein Trennelement (20) in mindestens einen ersten Ansaugteilkanal (22) und einen zweiten Ansaugteilkanal (24) teilbar ist, wobei die Filterabreinigungseinheit (10) mindestens eine Ventileinheit (26) zum Freigeben oder Verschließen der Ansaugteilkanäle (22, 24) aufweist.

2. Filterabreinigungseinheit (10) nach Anspruch 1
**dadurch gekennzeichnet, dass**
die Ansaugteilkanäle (22, 24) abwechselnd zu öffnen und/oder zu schließen sind, so dass je ein Ansaugteilkanal (22, 24) geöffnet und der andere Ansaugteilkanal (24, 22) geschlossen vorliegt.

3. Filterabreinigungseinheit (10) nach Anspruch 1 oder 2
**dadurch gekennzeichnet, dass**
während eines Saugbetriebs des Staubsaugers der zweite Ansaugteilkanal (24) im Wesentlichen offen vorliegt, während der erste Ansaugteilkanal (22) im Wesentlichen geschlossen vorliegt.

4. Filterabreinigungseinheit (10) nach einem der vorhergehenden Ansprüche
**dadurch gekennzeichnet, dass**
die mindestens eine Ventileinheit (26) von einem ersten Einzelventil (28) und einem zweiten Einzelventil (30) gebildet wird, wobei die Einzelventile (28, 30) unabhängig voneinander ansteuerbar sind.

5. Filterabreinigungseinheit (10) nach einem der Ansprüche 1 bis 3
**dadurch gekennzeichnet, dass**
die mindestens eine Ventileinheit (26) von einem ersten Flächenelement (32) und einem zweiten Flächenelement (34) gebildet wird, wobei die Flächenelemente (32, 34) über eine gemeinsame Achse (36) miteinander verbunden sind.

6. Filterabreinigungseinheit (10) nach einem der Ansprüche 1 bis 3
**dadurch gekennzeichnet, dass**
die mindestens eine Ventileinheit (26) von einem Einzelventil (38) gebildet wird, wobei das Einzelventil (38) in mindestens einer ersten Position (40) und einer zweiten Position (42) vorliegt und wobei das Einzelventil (38) in der ersten Position (40) den ersten Ansaugteilkanal (22) freigibt und den zweiten Ansaugteilkanal (24) verschließt und wobei das Einzelventil (38) in der zweiten Position (42) den zweiten Ansaugteilkanal (24) freigibt und den ersten Ansaugteilkanal (22) verschließt.

7. Filterabreinigungseinheit (10) nach einem der vorhergehenden Ansprüche
**dadurch gekennzeichnet, dass**
die Filterabreinigungseinheit (10) ein Kolbenelement (46) umfasst, wobei das Kolbenelement (46) durch Einlassen von Umgebungsluft (56) durch eine Außenöffnung (50) der Filterabreinigungseinheit (10) aus einer Ruheposition (52) in Richtung des Filters (16) der Filterabreinigungseinheit (10) bewegbar ist.

8. Filterabreinigungseinheit (10) nach Anspruch 7
**dadurch gekennzeichnet, dass**
die Außenöffnung (50) der Filterabreinigungseinheit (10) ein Außenventil (54) aufweist, wobei das Außenventil (54) dazu eingerichtet ist, die Außenöffnung (50) der Filterabreinigungseinheit (10) freizugeben oder zu verschließen.

9. Filterabreinigungseinheit (10) nach Anspruch 7 oder 8
**dadurch gekennzeichnet, dass**
das Kolbenelement (46) durch eine Betätigung der Ventileinheit (26) in seine Ruheposition (52) zurückgeholt wird.

10. Filterabreinigungseinheit (10) nach einem der Ansprüche 7 bis 9
**dadurch gekennzeichnet, dass**
das Kolbenelement (46) durch ein Öffnen des ersten Ansaugteilkanals (22) und durch ein Schließen des zweiten Ansaugteilkanals (24) in seine Ruheposition (52) zurückgeholt wird.

11. Filterabreinigungseinheit (10) nach einem der Ansprüche 7 bis 10
**dadurch gekennzeichnet, dass**
die Filterabreinigungseinheit (10) einen Magneten umfasst, wobei der Magnet dazu eingerichtet ist, das Kolbenelement (46) in seiner Ruheposition (52) zu halten.

12. Staubsauger mit einer Filterabreinigungseinheit (10) nach einem der vorhergehenden Ansprüche

13. Verfahren zum Abreinigen eines Filters (16) eines Staubsaugers nach Anspruch 12, wobei das Verfahren durch die folgenden **Schritte gekennzeichnet** ist:
a) Bereitstellung eines Staubsaugers nach Anspruch 12,
b) Betrieb des Staubsaugers, wobei in einem Saugbetrieb des Staubsaugers der erste Ansaugteilkanal (22) geschlossen und der zweite Ansaugteilkanal (24) geöffnet vorliegt,
c) Start eines Filterabreinigungsvorgangs durch Öffnen einer Außenöffnung (50) des Staubsaugers, so dass Umgebungsluft (56) in den Staubsauger eindringen kann,
d) Erzeugung eines indirekten Abreinigungsimpulses (60) durch die einströmende Umgebungsluft (56),
e) Abreinigung des Filters (16) des Staubsaugers durch den indirekten Abreinigungsimpuls (60).

14. Verfahren nach Anspruch 13
**dadurch gekennzeichnet, dass**
der Staubsauger ein Kolbenelement (46) aufweist, wobei das Kolbenelement (46) in einem Saugbetrieb des Staubsaugers in einer Ruheposition (52) vorliegt und durch einströmende Umgebungsluft (56) von der Ruheposition (52) in eine Filterabreinigungsposition (58) überführbar ist, wobei die Bewegung des Kolbenelements (46) den indirekten Abreinigungsimpuls (60) bewirkt.

15. Verfahren nach Anspruch 14
**dadurch gekennzeichnet, dass**
das Kolbenelement (46) aus der Filterabreinigungsposition (58) in die Ruheposition (52) durch ein Öffnen des ersten Ansaugteilkanals (22) und durch ein Schließen des zweiten Ansaugteilkanals (24) zurückholbar ist.
